# EUROPEAN PATENT APPLICATION

(11) **EP 4 442 755 A1**
(43) Date of publication of application: **09.10.2024**
(21) Application number: 22898683.2
(22) Date of filing: 28.11.2022
(51) Int. Cl.: C08L 23/18, C08K 5/3417, C08L 65/00, G02B 1/04

(54) **RESIN COMPOSITION FOR FORMING OPTICAL COMPONENT, MOLDED OBJECT, AND OPTICAL COMPONENT**

(30) Priority: 29.11.2021 JP 2021193298
(71) Applicant: Mitsui Chemicals, Inc., Tokyo 104-0028 (JP)
(72) Inventor: HASHIMOTO Yuki, Sodegaura-shi, Chiba 299-0265 (JP); TOTANI Yoshiyuki, Sodegaura-shi, Chiba 299-0265 (JP); SOEDA Yasuyuki, Singapore Science Park II, Singapore 117406 (SG); OKUNO Takayuki, Sodegaura-shi, Chiba 299-0265 (JP)
(74) Representative: Hoffmann Eitle
(86) International application number: PCT/JP2022/043700
(87) International publication number: WO 2023/095901

(57) **Abstract**

A resin composition for forming an optical component of the present invention contains (A) a cyclic olefin-based polymer and (B) one or a plurality of coloring agents, in which the cyclic olefin-based polymer (A) comprises at least one selected from a copolymer of ethylene or an α-olefin with a cyclic olefin, and a ring-opening polymer of a cyclic olefin, and a molded product having a thickness at which transmittance of light having a wavelength of 700 nm is 30%, which is formed of the resin composition for forming an optical component, satisfies all of the following conditions (1) to (3). (1) an average value of transmittance at a wavelength of 300 to 400 nm is equal to or less than 40%, (2) an average value of transmittance at a wavelength of 500 to 600 nm is equal to or more than 70%, and (3) transmittance at a wavelength of 650 nm is equal to or more than 60%.

## Description

### TECHNICAL FIELD

The present invention relates to a resin composition for forming an optical component, a molded product, and an optical component.

### BACKGROUND ART

In the related art, in an imaging apparatus capable of color imaging, a color different from the original may be generated as color bleeding, due to chromatic aberration of an optical system which forms an optical image of a subject on an imaging element. In particular, among visible light, light in a wavelength band close to the ultraviolet region or the infrared region is likely to cause the color bleeding, and for example, a phenomenon called a purple fringing (hereinafter, referred to as PF), in which a part of an image is colored in purple, has been known.

Such color bleeding can be suppressed to some extent by combining a plurality of lenses having different dispersion characteristics. However, a demand for refinement of the color bleeding has also increased as high resolution of the imaging apparatus (particularly, a camera for a smartphone) has required in recent years. Therefore, it has been difficult to sufficiently suppress the color bleeding only by combining the lenses.

In addition, as another problem, by light which is diffusely reflected on a surface of the lens or on a surface of an infrared cut filter between the lens and a sensor is incident on the sensor as stray light, a phenomenon called a ghosting, in which a light image which does not originally exist appears in an image, has been known.

Regarding these problems, it is conceivable that the color bleeding is refined by coloring the lens to absorb the light in the wavelength band close to the ultraviolet region or the infrared region. In addition, it is conceivable that, by using such a colored lens, a part of the light which is diffusely reflected on the surface of the lens or on the surface of the infrared cut filter between the lens and the sensor is absorbed by the lens, so that the ghosting is refined. On the other hand, since the entire image is colored in a case where the coloring of the lens is too dark, it is required that the absorption of visible light outside the wavelength band close to the ultraviolet region or the infrared region is as small as possible.

Patent Document 1 discloses an optical filter which comprises a transparent resin substrate containing a near-infrared absorbing coloring agent and a near-infrared reflecting film formed on at least one surface of the substrate, in which requirements of transmittance in a specific wavelength range are satisfied. In the document, it is disclosed that a cyclic olefin and a squarylium-based coloring agent are used.

Patent Document 2 discloses an optical imaging lens assembly containing in order from an object side to an image side: at least one optical lens element made of a plastic material comprising at least one long-wavelength light absorbing agent, and the long-wavelength light absorbing agent homogeneously mixed with the plastic material, and the optical lens element satisfies requirements of transmittance in a specific wavelength range. In the document, it is disclosed that a cyclic olefin-based resin is used as a resin and a squarylium-based coloring agent is used as a coloring agent.

### RELATED DOCUMENT

### PATENT DOCUMENT

[Patent Document 1] WO2014/192715
[Patent Document 2] JP2018-55091

### SUMMARY OF THE INVENTION

### TECHNICAL PROBLEM

However, in the techniques of the related art disclosed in Patent Documents 1 and 2, it has not been possible to sufficiently suppress the occurrence of color bleeding such as a purple fringing, and it has not been possible to maintain sufficient light transmittance as an optical member for imaging.

### SOLUTION TO PROBLEM

According to the present invention, it has been found that the above-described problems can be solved by combining a specific coloring agent with a cyclic olefin-based polymer to obtain predetermined transmission characteristics, and the present invention has been completed.

That is, the present invention can be described as below.
[1] A resin composition for forming an optical component, comprising:
   (A) a cyclic olefin-based polymer; and
   (B) one or a plurality of coloring agents,
      wherein the cyclic olefin-based polymer (A) comprises at least one selected from a copolymer of ethylene or an α-olefin with a cyclic olefin, and a ring-opening polymer of a cyclic olefin, and
      a molded product having a thickness at which transmittance of light having a wavelength of 700 nm is 30%, which is formed of the resin composition for forming an optical component, satisfies all of the following conditions (1) to (3),
         (1) an average value of transmittance at a wavelength of 300 to 400 nm is equal to or less than 40%,
         (2) an average value of transmittance at a wavelength of 500 to 600 nm is equal to or more than 70%, and
         (3) transmittance at a wavelength of 650 nm is equal to or more than 60%.
[2] A resin composition for forming an optical component, comprising:
   (A) a cyclic olefin-based polymer; and
   (B) one or a plurality of coloring agents,
      wherein the cyclic olefin-based polymer (A) comprises at least one selected from a copolymer of ethylene or an α-olefin with a cyclic olefin, and a ring-opening polymer of a cyclic olefin, and
      a molded product having a thickness of 1 mm, which is formed of the resin composition for forming an optical component, satisfies all of the following conditions (1) to (5),
         (1) an average value of transmittance at a wavelength of 300 to 400 nm is equal to or less than 40%,
         (2) an average value of transmittance at a wavelength of 500 to 600 nm is equal to or more than 70%,
         (3) transmittance at a wavelength of 650 nm is equal to or more than 60%,
         (4) a minimum value of transmittance at a wavelength of 660 nm to 750 nm is equal to or less than 30%, and
         (5) an internal haze is equal to or less than 1.0%.
[3] The resin composition for forming an optical component according to [1] or [2],
   in which at least one of the coloring agent (B) is a squarylium-based coloring agent.
[4] The resin composition for forming an optical component according to any one of [1] to [3],
   in which at least one of the coloring agent (B) is a squarylium-based coloring agent represented by General Formula (1), 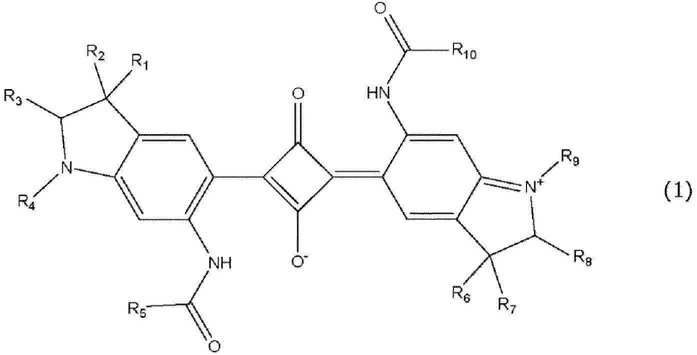
   in which, in the Formula (1), R₁ to R₁₀ each independently represent a hydrogen atom, a halogen atom, a cyano group, a nitro group, an alkyl group having 1 to 20 carbon atoms, an alkenyl group having 1 to 20 carbon atoms, a halogenoalkyl group having 1 to 20 carbon atoms, an alkoxy group having 1 to 20 carbon atoms, a halogenoalkoxy group having 1 to 20 carbon atoms, an alkylthio group having 1 to 20 carbon atoms, an alkoxyalkyl group having 1 to 20 carbon atoms, an alkoxyalkoxyalkyl group having 1 to 20 carbon atoms, a halogenoalkoxyalkyl group having 1 to 20 carbon atoms, a substituted or unsubstituted aryl group, a substituted or unsubstituted aralkyl group, a substituted or unsubstituted amino group, a substituted or unsubstituted acyl group, a substituted or unsubstituted aryloxy group, a substituted or unsubstituted aryloxyalkyl group, a substituted or unsubstituted aralkyloxy group, a substituted or unsubstituted aralkyloxyalkyl group, or a substituted or unsubstituted arylthio group.
[5] The resin composition for forming an optical component according to [4],
   in which R₄ and R₉ in General Formula (1) are alkyl groups having 3 or more carbon atoms.
[6] A resin composition for forming an optical component, containing:
   (A) a cyclic olefin-based polymer; and
   (B) a squarylium-based coloring agent,
      in which the cyclic olefin-based polymer (A) comprises at least one selected from a copolymer of ethylene or an α-olefin with a cyclic olefin, and a ring-opening polymer of a cyclic olefin, and
      at least one of the coloring agent (B) is a squarylium-based coloring agent represented by General Formula (1), 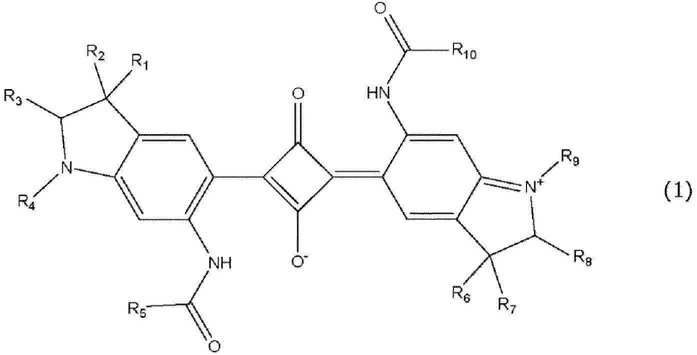
      in which, in the Formula (1), R₁ to R₁₀ each independently represent a hydrogen atom, a halogen atom, a cyano group, a nitro group, an alkyl group having 1 to 20 carbon atoms, an alkenyl group having 1 to 20 carbon atoms, a halogenoalkyl group having 1 to 20 carbon atoms, an alkoxy group having 1 to 20 carbon atoms, a halogenoalkoxy group having 1 to 20 carbon atoms, an alkylthio group having 1 to 20 carbon atoms, an alkoxyalkyl group having 1 to 20 carbon atoms, an alkoxyalkoxyalkyl group having 1 to 20 carbon atoms, a halogenoalkoxyalkyl group having 1 to 20 carbon atoms, a substituted or unsubstituted aryl group, a substituted or unsubstituted aralkyl group, a substituted or unsubstituted amino group, a substituted or unsubstituted acyl group, a substituted or unsubstituted aryloxy group, a substituted or unsubstituted aryloxyalkyl group, a substituted or unsubstituted aralkyloxy group, a substituted or unsubstituted aralkyloxyalkyl group, or a substituted or unsubstituted arylthio group.
[7] The resin composition for forming an optical component according to [6],
   in which R₄ and R₉ in General Formula (1) are alkyl groups having 3 or more carbon atoms.
[8] The resin composition for forming an optical component according to any one of [1] to [7],
   in which, a refractive index to light having a wavelength of 587 nm of a molded product having a thickness of 1 mm, which is formed of the resin composition for forming an optical component, is equal to or more than 1.50.
[9] The resin composition for forming an optical component according to any one of [1] to [8],
   in which a total content of the coloring agents in the resin composition for forming an optical component is equal to or more than 100 ppm and equal to or less than 5,000 ppm with respect to the resin composition for forming an optical component.
[10] A molded product obtained by molding the resin composition for forming an optical component according to any one of [1] to [9] .
[11] An optical component comprising:
   the molded product according to [10].
[12] The optical component according to [11],
   in which the optical component is a lens.
[13] A lens comprising:
   a molded product obtained by molding the resin composition for forming an optical component according to [1],
   in which the lens satisfies all of the following conditions (1) to (3),
      (1) an average value of transmittance at a wavelength of 300 to 400 nm is equal to or less than 40%,
      (2) an average value of transmittance at a wavelength of 500 to 600 nm is equal to or more than 70%, and
      (3) transmittance at a wavelength of 650 nm is equal to or more than 60%.
[14] A lens comprising:
   a molded product obtained by molding the resin composition for forming an optical component according to [2],
   in which the lens satisfies all of the following conditions (1) to (5),
      (1) an average value of transmittance at a wavelength of 300 to 400 nm is equal to or less than 40%,
      (2) an average value of transmittance at a wavelength of 500 to 600 nm is equal to or more than 70%,
      (3) transmittance at a wavelength of 650 nm is equal to or more than 60%,
      (4) a minimum value of transmittance at a wavelength of 660 nm to 750 nm is equal to or less than 30%, and
      (5) an internal haze is equal to or less than 1.0%.

### ADVANTAGEOUS EFFECTS OF INVENTION

According to the present invention, it is possible to provide a resin composition for forming an optical component which can obtain a molded product in which occurrence of color bleeding such as a purple fringing is sufficiently suppressed, and sufficient light transmittance can be maintained even after aging, while maintaining light transmittance able to be used as an optical member for imaging and light absorption at a specific wavelength. In other words, according to the present invention, it is possible to provide a resin composition for forming an optical component, which has excellent balance of these properties.

### DESCRIPTION OF EMBODIMENTS

Hereinafter, embodiments of the present invention will be described. Unless otherwise specified, "1 to 10" represents "equal to or more than 1" and "equal to or less than 10".

The resin composition according to the present embodiment contains (A) a cyclic olefin-based polymer and (B) one or a plurality of coloring agents. Hereinafter, each component will be described in detail.

### [Cyclic olefin-based polymer (A)]

In the present embodiment, the cyclic olefin-based polymer (A) is a polymer having a structural unit derived from a cyclic olefin as an essential constituent unit. The cyclic olefin-based polymer (A) comprises at least one selected from a cyclic olefin-based copolymer (A-1) or a ring-opening polymer (A-2) of a cyclic olefin. By comprising the component, heat resistance can be further improved or moldability can be improved while maintaining balance between transparency and refractive index of an optical component to be obtained.

### (Cyclic olefin-based copolymer (A-1))

Examples of the cyclic olefin-based copolymer (A-1) according to the present embodiment comprise a copolymer of ethylene or an α-olefin with a cyclic olefin. A cyclic olefin compound constituting the above-described cyclic olefin-based copolymer (A-1) is not particularly limited, and examples thereof include cyclic olefin monomers described in paragraphs 0037 to 0063 of WO2006/0118261.

From the viewpoint of further improving optical properties of the optical component to be obtained, the cyclic olefin-based copolymer (A-1) preferably has a structural unit (a) and a structural unit (b). The optical properties mean characteristics such as transparency and refractive index of the optical component.

### Structural unit (a): structural unit derived from at least one olefin represented by General Formula (I)

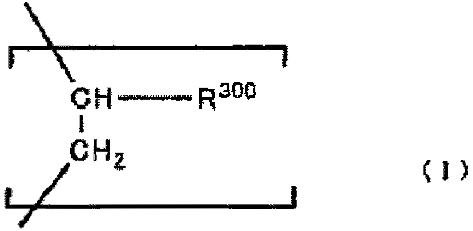

In General Formula (I), R³⁰⁰ represents a hydrogen atom or a linear or branched hydrocarbon group having 1 to 29 carbon atoms.

### Structural unit (b): structural unit derived from at least one cyclic olefin selected from the group consisting of General Formula (II), General Formula (III), and General Formula (IV)

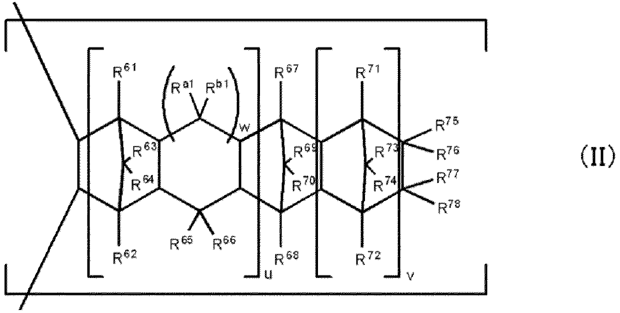

In General Formula (II), u is 0 or 1, v is 0 or a positive integer, and w is 0 or 1. R⁶¹ to R⁷⁸, R^{a1}, and R^{b1} may be the same or different from each other, and each represents a hydrogen atom, a halogen atom, an alkyl group having 1 to 20 carbon atoms, a halogenated alkyl group having 1 to 20 carbon atoms, a cycloalkyl group having 3 to 15 carbon atoms, or an aromatic hydrocarbon group having 6 to 20 carbon atoms. R⁷⁵ to R⁷⁸ may bonded to each other to form a monocyclic ring or a polycyclic ring.

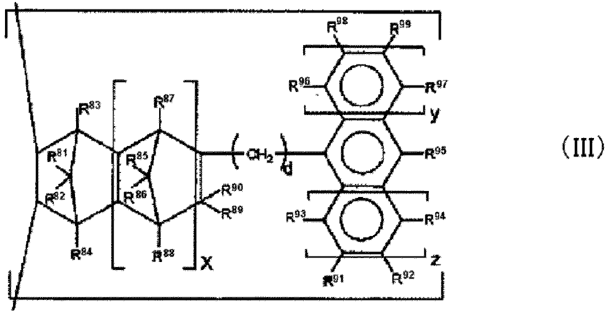

In General Formula (III), x and d are each independently 0 or an integer of 1 or more. y and z are each independently an integer of 0 to 2. R⁸¹ to R⁹⁹ may be the same or different from each other, and each represents a hydrogen atom, a halogen atom, an aliphatic hydrocarbon group which is an alkyl group having 1 to 20 carbon atoms or a cycloalkyl group having 3 to 15 carbon atoms, an aromatic hydrocarbon group having 6 to 20 carbon atoms, or an alkoxy group. A carbon atom to which R⁸⁹ and R⁹⁰ are bonded may be bonded to a carbon atom to which R⁹³ is bonded or to a carbon atom to which R⁹¹ is bonded, directly or through an alkylene group having 1 to 3 carbon atoms. In addition, in a case where y = z = 0, R⁹² and R⁹⁵, or R⁹⁵ and R⁹⁹ may be bonded to each other to form a monocyclic aromatic ring or a polycyclic aromatic ring.

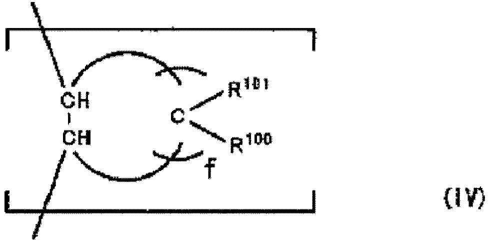

In General Formula (IV), R¹⁰⁰ and R¹⁰¹ may be the same or different from each other, and each represents a hydrogen atom or a hydrocarbon group having 1 to 5 carbon atoms. f is 1 ≤ f ≤ 18.

An olefin monomer which is one copolymerization raw material of the cyclic olefin-based copolymer (A-1) according to the present embodiment undergoes an addition polymerization to form the constituent unit represented by General Formula (I) described above. Specifically, an olefin monomer represented by General Formula (Ia) corresponding to General Formula (I) described above is used.

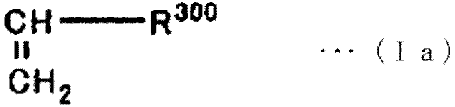

In General Formula (Ia), R³⁰⁰ represents a hydrogen atom or a linear or branched hydrocarbon group having 1 to 29 carbon atoms.

Examples of the olefin monomer represented by General Formula (Ia) include ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, and 1-eicosene. Among these olefin monomers, from the viewpoint of obtaining an optical component having more excellent heat resistance, mechanical properties, and optical properties, ethylene or propylene is preferable, and ethylene is particularly preferable. Two or more kinds of the olefin monomers represented by General Formula (Ia) may be used.

In a case where the total constituent unit constituting the cyclic olefin-based copolymer (A-1) is indicated by 100 mol%, a proportion of the structural unit (a) derived from olefin is preferably equal to or more than 5 mol% and equal to or less than 95 mol%, more preferably equal to or more than 20 mol% and equal to or less than 90 mol%, still more preferably equal to or more than 40 mol% and equal to or less than 80 mol%, and particularly preferably equal to or more than 50 mol% and equal to or less than 70 mol%.

The proportion of the structural unit (a) derived from olefin can be measured by ¹³C-NMR.

A cyclic olefin monomer which is one copolymerization raw material of the cyclic olefin-based copolymer (A-1) undergoes an addition polymerization to form the structural unit (b) derived from the cyclic olefin represented by General Formula (II), General Formula (III), or General Formula (IV) described above. Specifically, a cyclic olefin monomer represented by General Formula (IIa), General Formula (IIIa), or General Formula (IVa), each corresponding to General Formula (II), General Formula (III), or General Formula (IV) described above, is used.

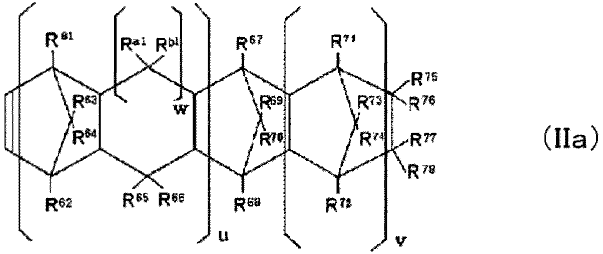

In General Formula (IIa), u is 0 or 1; v is 0 or a positive integer, preferably an integer of 0 or more and 2 or less and more preferably 0 or 1; w is 0 or 1; R⁶¹ to R⁷⁸, R^{a1}, and R^{b1} may be the same or different from each other, and are each a hydrogen atom, a halogen atom, an alkyl group having 1 to 20 carbon atoms, a halogenated alkyl group having 1 to 20 carbon atoms, a cycloalkyl group having 3 to 15 carbon atoms, or an aromatic hydrocarbon group having 6 to 20 carbon atoms; and R⁷⁵ to R⁷⁸ may be bonded to each other to form a monocyclic ring or a polycyclic ring.

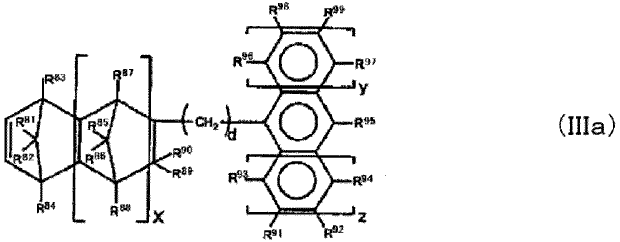

In General Formula (IIIa), x and d are each independently 0 or an integer of 1 or more, preferably an integer of 0 or more and 2 or less and more preferably 0 or 1; y and z are each independently 0, 1, or 2; R⁸¹ to R⁹⁹ may be the same or different from each other, and are each a hydrogen atom, a halogen atom, an aliphatic hydrocarbon group that is an alkyl group having 1 to 20 carbon atoms or a cycloalkyl group having 3 to 15 carbon atoms, and an aromatic hydrocarbon group having 6 to 20 carbon atoms or an alkoxy group; a carbon atom to which R⁸⁹ and R⁹⁰ are bonded may be bonded to a carbon atom to which R⁹³ is bonded or to a carbon atom to which R⁹¹ is bonded, directly or through an alkylene group having 1 to 3 carbon atoms; and in a case of y = z = 0, R⁹⁵ and R⁹², or R⁹⁵ and R⁹⁹ may be bonded to each other to form a monocyclic aromatic ring or a polycyclic aromatic ring.

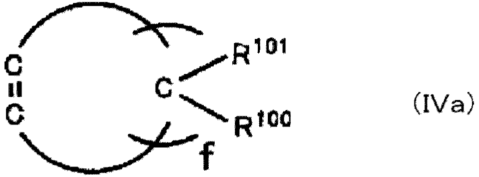

In General Formula (IVa), R¹⁰⁰ and R¹⁰¹ may be the same or different from each other, and each represent a hydrogen atom or a hydrocarbon group having 1 to 5 carbon atoms; and f is 1 ≤ f ≤ 18.

By using, as the copolymerization component, the olefin monomer represented by General Formula (Ia) described above or the cyclic olefin monomer represented by General Formula (IIa), General Formula (IIIa), or General Formula (IVa) described above, solubility of the cyclic olefin copolymer (A-1) in a solvent is further improved, so that the moldability is favorable and yield of a product is improved.

Regarding specific examples of the cyclic olefin monomer represented by General Formula (IIa), General Formula (IIIa), or General Formula (IVa), compounds described in paragraphs 0037 to 0063 of WO2006/0118261 can be used.

Specific examples thereof include bicyclo-2-heptene derivatives (bicyclohept-2-ene derivatives), tricyclo-3-decene derivatives, tricyclo-3-undecene derivatives, tetracyclo-3-dodecene derivatives, pentacyclo-4-pentadecene derivatives, pentacyclo pentadecadien derivatives, pentacyclo-3-pentadecene derivatives, pentacyclo-4-hexadecene derivatives, pentacyclo-3-hexadecene derivatives, hexacyclo-4-heptadecene derivatives, heptacyclo-5-eicosene derivatives, heptacyclo-4-eicosene derivatives, heptacyclo-5-heneicosene derivatives, octacyclo-5-docosene derivatives, nonacyclo-5-pentacosene derivatives, nonacyclo-6-hexacosene derivatives, cyclopentadieneacenaphthylene adducts, 1,4-methano-1,4,4a,9a-tetrahydrofluorene derivatives, 1,4-methano-1,4,4a,5,10,10a-hexahydroanthracene derivatives, and cycloalkylene derivatives having 3 to 20 carbon atoms.

Among the cyclic olefin monomers represented by General Formula (IIa), General Formula (IIIa), or General Formula (IVa), the cyclic olefin represented by General Formula (IIa) is preferable.

As the cyclic olefin monomer represented by General Formula (IIa), bicyclo[2.2.1]-2-heptene (also referred to as norbornene) or tetracyclo[4.4.0.1^{2,5}.1^{7,10}]-3-dodecene (also referred to as tetracyclododecene) is preferably used, and tetracyclo[4.4.0.1^{2,5}.1^{7,10}]-3-dodecene is more preferably used. Since such a cyclic olefin has a rigid ring structure, there is an advantage that elastic modulus of the copolymer and the optical component is easily maintained.

In a case where the total constituent unit constituting the cyclic olefin-based copolymer (A-1) according to the present embodiment is indicated by 100 mol%, a proportion of the structural unit (b) derived from a cyclic olefin is preferably equal to or more than 5 mol% and equal to or less than 95 mol%, more preferably equal to or more than 10 mol% and equal to or less than 80 mol%, still more preferably equal to or more than 20 mol% and equal to or less than 60 mol%, and particularly preferably equal to or more than 30 mol% and equal to or less than 50 mol%.

A copolymerization type of the cyclic olefin-based copolymer (A-1) according to the present embodiment is not particularly limited, and examples thereof include a random copolymer and a block copolymer. In the present embodiment, since a high-precision optical component having excellent optical properties such as transparency, refractive index, and birefringence index can be obtained, it is preferable to use a random copolymer as the cyclic olefin-based copolymer (A-1) according to the present embodiment.

As the cyclic olefin-based copolymer (A-1) according to the present embodiment, a random copolymer of ethylene and tetracyclo [4.4.0.1^{2,5}.1^{7,10}]-3-dodecene or a random copolymer of ethylene and bicyclo[2.2.1]-2-heptene is preferable, and a random copolymer of ethylene and tetracyclo[4.4.0.1^{2,5}.1^{7,10}]-3-dodecene is more preferable.

The copolymer (A-1) according to the present embodiment may be used alone or in combination of two or more kinds thereof.

The copolymer (A-1) according to the present embodiment can be produced by selecting appropriate conditions according to methods described in, for example, Japanese Published Patent Application A-S60-168708, Japanese Published Patent Application A-S61-120816, Japanese Published Patent Application A-S61-115912, Japanese Published Patent Application A-S61-115916, Japanese Published Patent Application A-S61-271308, Japanese Published Patent Application A-S61-272216, Japanese Published Patent Application A-S62-252406, Japanese Published Patent Application A-S62-252407, and the like.

It is preferable that the cyclic olefin-based copolymer (A-1) has a structural unit (II) represented by General Formula (II) described above and a structural unit (D) derived from a cyclic olefin having an aromatic ring, in which the structural unit (II) does not have an aromatic ring and the cyclic olefin having an aromatic ring comprises one or two or more selected from the group consisting of a compound represented by Formula (D-1), a compound represented by Formula (D-2), and a compound represented by Formula (D-3).

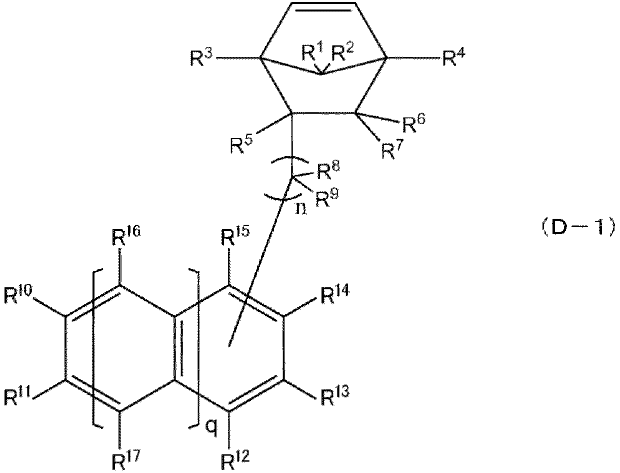

In General Formula (D-1), n and q are each independently 0, 1, or 2. R¹ to R¹⁷ are each independently a hydrogen atom, a halogen atom excluding a fluorine atom, or a hydrocarbon group having 1 to 20 carbon atoms, which may be substituted with a halogen atom excluding a fluorine atom, in which one of R¹⁰ to R¹⁷ is a bonding hand. In addition, in a case where q = 0, R¹⁰ and R¹¹, R¹¹ and R¹², R¹² and R¹³, R¹³ and R¹⁴, R¹⁴ and R¹⁵, or R¹⁵ and R¹⁰ may be bonded to each other to form a monocyclic ring or a polycyclic ring. In addition, in a case where q = 1 or 2, R¹⁰ and R¹¹, R¹¹ and R¹⁷, R¹⁷ and R¹⁷, R¹⁷ and R¹², R¹² and R¹³, R¹³ and R¹⁴, R¹⁴ and R¹⁵, R¹⁵ and R¹⁶, R¹⁶ and R¹⁶, or R¹⁶ and R¹⁰ may be bonded to each other to form a monocyclic ring or a polycyclic ring, in which the monocyclic ring of the polycyclic ring may have a double bond, and the monocyclic ring or the polycyclic ring may be an aromatic ring.

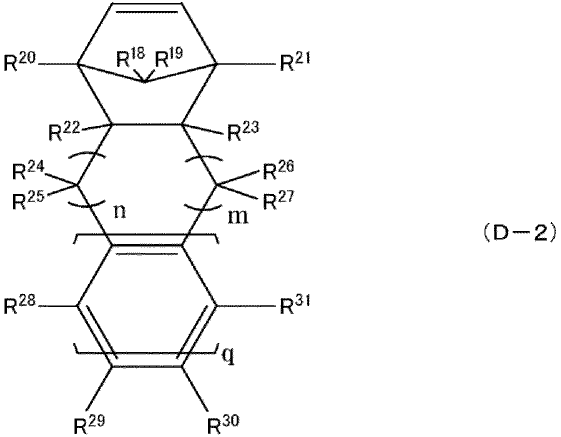

In Formula (D-2), n and m are each independently 0, 1, or 2, and q is 1, 2, or 3. R¹⁸ to R³¹ are each independently a hydrogen atom, a halogen atom excluding a fluorine atom, or a hydrocarbon group having 1 to 20 carbon atoms, which may be substituted with a halogen atom excluding a fluorine atom. In addition, in a case where q = 1, R²⁸ and R²⁹, R²⁹ and R³⁰, or R³⁰ and R³¹ may be bonded to each other to form a monocyclic ring or a polycyclic ring. In addition, in a case where q = 2 or 3, R²⁸ and R²⁸, R²⁸ and R²⁹, R²⁹ and R³⁰, R³⁰ and R³¹, or R³¹ and R³¹ may be bonded to each other to form a monocyclic ring or a polycyclic ring, in which the monocyclic ring of the polycyclic ring may have a double bond, and the monocyclic ring or the polycyclic ring may be an aromatic ring.

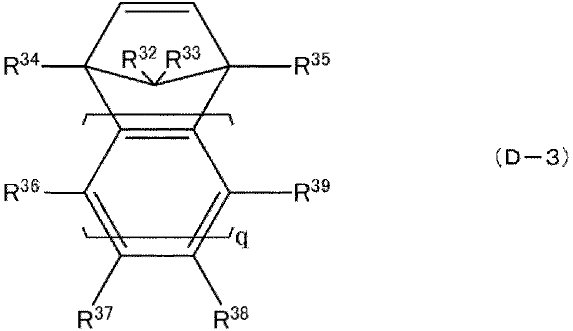

In Formula (D-3), q is 1, 2, or 3, and R³² to R³⁹ are each independently a hydrogen atom, a halogen atom excluding a fluorine atom, or a hydrocarbon group having 1 to 20 carbon atoms, which may be substituted with a halogen atom excluding a fluorine atom. In addition, in a case where q = 1, R³⁶ and R³⁷, R³⁷ and R³⁸, or R³⁸ and R³⁹ may be bonded to each other to form a monocyclic ring or a polycyclic ring. In addition, in a case where q = 2 or 3, R³⁶ and R³⁶, R³⁶ and R³⁷, R³⁷ and R³⁸, R³⁸ and R³⁹, or R³⁹ and R³⁹ may be bonded to each other to form a monocyclic ring or a polycyclic ring, in which the monocyclic ring of the polycyclic ring may have a double bond, and the monocyclic ring or the polycyclic ring may be an aromatic ring.

In addition, examples of the hydrocarbon groups having 1 to 20 in (D-1) to (D-3) include, each independently, an alkyl group having 1 to 20 carbon atoms, a cycloalkyl group having 3 to 15 carbon atoms, and an aromatic ring hydrocarbon group. More specific examples thereof include, as the alkyl group, a methyl group, an ethyl group, a propyl group, an isopropyl group, an amyl group, a hexyl group, an octyl group, a decyl group, a dodecyl group, and an octadecyl group. More specific examples thereof include, as the cycloalkyl group, a cyclohexyl group. More specific examples thereof include, as the aromatic hydrocarbon group, aryl groups such as a phenyl group, a tolyl group, a naphthyl group, a benzyl group, and a phenylethyl group, and an aralkyl group. These hydrocarbon groups may be substituted with a halogen atom excluding a fluorine atom.

In a case where such a cyclic olefin-based copolymer (A-1) is used, occurrence of haze before and after a humidity and heat resistance test can be further suppressed. In addition, contamination inside a mold due to continuous molding can be further suppressed.

In a case where all structural units of the cyclic olefin-based copolymer (A-1) according to the present embodiment is indicated by 100 mol%, contents of the structural unit (II) represented by General Formula (II) and the structural unit (D) derived from the cyclic olefin having an aromatic ring are preferably equal to or more than 5 mol% and equal to or less than 95 mol%, more preferably equal to or more than 10 mol% and equal to or less than 90 mol%, still more preferably equal to or more than 20 mol% and equal to or less than 80 mol%, even more preferably equal to or more than 30 mol% and equal to or less than 80 mol%, and even still more preferably equal to or more than 40 mol% and equal to or less than 78 mol%.

In the present embodiment, the contents of the structural unit (II) and the structural unit (D) can be measured, for example, by ¹H-NMR or ¹³C-NMR.

### (Ring-opening polymer (A-2) of cyclic olefin)

In addition, as the cyclic olefin-based polymer (A), a ring-opening polymer (A-2) of a cyclic olefin can be used.

Examples of the ring-opening polymer (A-2) of a cyclic olefin include a ring-opening polymer of a norbornene-based monomer, a ring-opening polymer of a norbornene-based monomer and other monomers capable of ring-opening copolymerization with the norbornene-based monomer, and hydrogenated products thereof.

Examples of the norbornene-based monomer include bicyclo[2.2.1]hept-2-ene (trivial name: norbornene) and derivatives thereof (having a substituent in a ring thereof), tricyclo[4.3.0^{1,6}.1^{2,5}]-deca-3,7-diene (trivial name dicyclopentadiene) and derivatives thereof, 7,8-benzotricyclo[4.3.0.1^{2,5}]deca-3-ene (trivial name: metanotetrahydrofluorene, also referred to as 1,4-methano-1,4,4a,9a-tetrahydrofluorene) and derivatives thereof, and tetracyclo [4.4.0.1^{2,5}.1^{7,10}]-3-dodecene (trivial name: tetracyclododecene) and derivatives thereof.

Examples of a substituent substituted to a ring of each derivative include an alkyl group, an alkylene group, a vinyl group, an alkoxycarbonyl group, and an alkylidene group. The ring of each derivative may have one or two or more substituents. Examples of the derivative having the substituent contained in such a ring include 8-methoxycarbonyl-tetracyclo[4.4.0.1^{2,5}.1^{7,10}]dodeca-3-ene, 8-methyl-8-methoxycarbonyl-tetracyclo [4.4.0.1^{2,5}.1^{7,10}]dodeca-3-ene, and 8-ethylidene-tetracyclo[4.4.0.1^{2,5}.1^{7,10}]dodeca-3-ene.

These norbornene-based monomers are each used alone or in combination of two or more kinds thereof.

The ring-opening polymer of the norbornene-based monomer or the ring-opening polymer of the norbornene-based monomer and other monomers capable of ring-opening copolymerization with the norbornene-based monomer can be obtained by polymerization of a monomer component in the presence of a known ring-opening polymerization catalyst.

As the ring-opening polymerization catalyst, for example, a catalyst consisting of a halide of a metal such as ruthenium, and osmium, a nitrate or an acetylacetone compound, and a reducing agent; and a catalyst consisting of a halide of a metal such as titanium, zirconium, tungsten, and molybdenum or an acetylacetone compound and an organoaluminum compound; and the like can be used.

Examples of other monomers capable of ring-opening copolymerization with the norbornene-based monomer include monocyclic cyclic olefin monomers such as cyclohexene, cycloheptene, and cyclooctene.

A hydrogenated product of the ring-opening polymer of the norbornene-based monomer or a hydrogenated product of the ring-opening polymer of the norbornene-based monomer and other monomers capable of ring-opening copolymerization with the norbornene-based monomer can be usually obtained by a method in which a known hydrogenation catalyst containing a transition metal such as nickel or palladium is added to a polymerization solution of the ring-opening polymer, and a carbon-carbon unsaturated bond is subjected to hydrogenation.

The ring-opening polymer (A-2) of a cyclic olefin according to the present embodiment can be produced by selecting appropriate conditions according to methods described in, for example, Japanese Published Patent Application A-S60-26024, Japanese Published Patent Application A-H09-268250, Japanese Published Patent Application A-S63-145324, JP2001-72839, and the like.

The ring-opening polymer (A-2) of a cyclic olefin according to the present embodiment may be used alone or in combination of two or more kinds thereof.

A content of the cyclic olefin-based polymer (A) according to the present embodiment in the resin composition is preferably equal to or more than 80% by mass and equal to or less than 99% by mass, more preferably equal to or more than 90% by mass and equal to or less than 99% by mass, and still more preferably equal to or more than 95% by mass and equal to or less than 99% by mass.

A glass transition temperature (Tg) of the cyclic olefin-based polymer (A) according to the present embodiment is preferably in a range of equal to or higher than 130°C and equal to or lower than 170°C. In a case where the glass transition temperature (Tg) of the cyclic olefin-based polymer (A) is within the above-described range, sufficient heat resistance and favorable moldability can be obtained in a case of being used as an optical component which requires heat resistance, such as invehicle camera lenses or camera lenses for mobile devices.

The glass transition temperature (Tg) of the cyclic olefin-based polymer (A) according to the present embodiment can be measured with a differential scanning calorimeter (DSC). For example, the glass transition temperature can be measured by, for example, a method in which the temperature is increased to 200°C at a temperature increasing rate of 10 °C/min from the room temperature under a nitrogen atmosphere by using RDC220 manufactured by SII NanoTechnology Inc. and maintained for 5 minutes, and subsequently, the temperature thereof is decreased to 30°C at a temperature decreasing rate of 10 °C/min and maintained for 5 minutes, and then the temperature thereof is increased to 200°C at a temperature increasing rate of 10 °C/min.

### [Coloring agent (B)]

The coloring agent (B) used in the present embodiment may be composed of one or a plurality of coloring agents, and it is preferable that at least one of the coloring agents is a squarylium-based coloring agent represented by General Formula (1) .

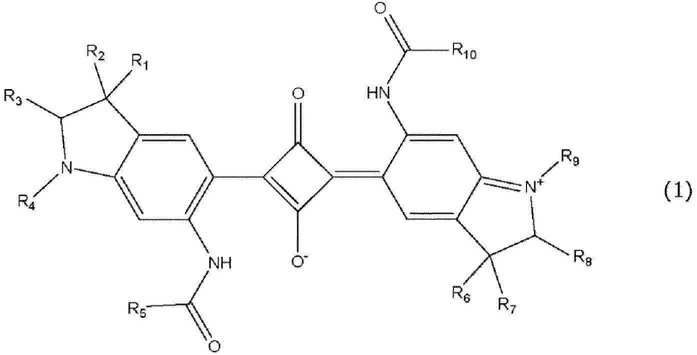

In Formula (1), R₁ to R₁₀ each independently represent a hydrogen atom, a halogen atom, a cyano group, a nitro group, an alkyl group having 1 to 20 carbon atoms, an alkenyl group having 1 to 20 carbon atoms, a halogenoalkyl group having 1 to 20 carbon atoms, an alkoxy group having 1 to 20 carbon atoms, a halogenoalkoxy group having 1 to 20 carbon atoms, an alkylthio group having 1 to 20 carbon atoms, an alkoxyalkyl group having 1 to 20 carbon atoms, an alkoxyalkoxyalkyl group having 1 to 20 carbon atoms, a halogenoalkoxyalkyl group having 1 to 20 carbon atoms, a substituted or unsubstituted aryl group, a substituted or unsubstituted aralkyl group, a substituted or unsubstituted amino group, a substituted or unsubstituted acyl group, a substituted or unsubstituted aryloxy group, a substituted or unsubstituted aryloxyalkyl group, a substituted or unsubstituted aralkyloxy group, a substituted or unsubstituted aralkyloxyalkyl group, or a substituted or unsubstituted arylthio group.

In a case where the above-described group has a substituent, examples of the substituent include a phenyl group, a tolyl group, a benzyl group, a phenethyl group, a benzoyl group, a formyl group, and an acetyl group.

As R₁ to R₁₀, from the viewpoint of the effects of the present invention, a hydrogen atom, an alkyl group having 1 to 20 carbon atoms, or an alkenyl group having 1 to 20 carbon atoms is preferable, and an alkyl group having 1 to 20 carbon atoms is more preferable.

In the present embodiment, it is preferable that R₄ and R₉ are alkyl groups having 3 or more carbon atoms. The upper limit value of the number of carbon atoms is not particularly limited, but is 20 or less. As a result, compatibility between the squarylium-based coloring agent and the cyclic olefin-based polymer (A) is improved, and the heat resistance of the molded product to be obtained is further improved.

The squarylium-based coloring agent having the above-described structure has a sharp absorption peak near 700 nm, has low absorption in other wavelength bands, and has high heat resistance and high light resistance, which is suitable in the present embodiment.

Specific examples of the squarylium-based coloring agent having the above-described structure include 1,3-bis[6-[(2-ethyl-1-oxohexyl)amino]-2,3-dihydro-2,3,3-trimethyl-1-octyl-1H-indol-5-yl]-2,4-dihydroxy-cyclobutenediylium, and 1,3-bis[6-[(2-ethyl-1-oxohexyl)amino]-2,3-dihydro-2,3,3-trimethyl-1-(propan-2-yl)-1H-indol-5-yl]-2,4-dihydroxy-cyclobutenediylium.

In a case where the above-described squarylium-based coloring agent is used in combination with other coloring agents, specific examples of the other coloring agents include an anthraquinone-based coloring agent, a benzotriazole-based coloring agent, a benzophenone-based coloring agent, a triazinebased coloring agent, a cyclic iminoester-based coloring agent, and an indole-based coloring agent, and from the viewpoint of heat resistance and light resistance, a benzotriazole-based coloring agent is particularly preferable.

Specific examples of the benzotriazole-based coloring agent include 2-(2-hydroxy-5-methylphenyl) benzotriazole, 2-(2-hydroxy-5-tert-octylphenyl) benzotriazole, 2-(2-hydroxy-3,5-dicumylphenyl) phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2N-benzotriazol-2-yl) phenol], 2-(2-hydroxy-3,5-di-tert-butylphenyl) benzotriazole, 2-(2-hydroxy-3,5-di-tert-butylphenyl)-5-chlorobenzotriazole, 2-(2-hydroxy-3,5-di-tert-amylphenyl) benzotriazole, 2-(2-hydroxy-5-tert-octylphenyl) benzotriazole, 2-(2-hydroxy-5-tert-butylphenyl) benzotriazole, 2-(2-hydroxy-4-n-octyloxyphenyl) benzotriazole, 2,2'-methylenebis(4-cumyl-6-benzotriazolephenyl), 2,2'-p-phenylenebis(1,3-benzoxazin-4-one), 2-[2-hydroxy-3-(3,4,5,6-tetrahydrophthalimidomethyl)-5-methylphenyl]benzotriazole, 2-(5-chloro-2H-benzo[d][1,2,3]triazol-2-yl)-5-(ethylamino)-4-methylphenol, and 2-(2'-hydroxy-3'-t-butyl-5'-methylphenyl)-5-octylsulfanylbenzotriazole.

Among the above-described coloring agents, as the benzotriazole-based coloring agent which is the other coloring agents used in combination, 2-(5-chloro-2H-benzo[d][1,2,3]triazol-2-yl)-5-(ethylamino)-4-methylphenol, 2-(2'-hydroxy-3'-t-butyl-5'-methylphenyl)-5-octylsulfanylbenzotriazole, (2-(2-hydroxy-5-tert-butylphenyl)benzotriazole, 2-(2-hydroxy-4-n-octyloxyphenyl)benzotriazole, 2,2'-methylenebis(4-cumyl-6-benzotriazolephenyl), 2,2'-p-phenylenebis(1,3-benzoxazin-4-one), or 2-[2-hydroxy-3-(3,4,5,6-tetrahydrophthalimidomethyl)-5-methylphenyl]benzotriazole) is preferable; and 2-(5-chloro-2H-benzo[d][1,2,3]triazol-2-yl)-5-(ethylamino)-4-methylphenol or 2-(2'-hydroxy-3'-t-butyl-5'-methylphenyl)-5-octylsulfanylbenzotriazole is more preferable.

In the resin composition according to the present embodiment, the total content of the coloring agents in the resin composition is preferably equal to or more than 100 ppm and equal to or less than 5,000 ppm, and particularly preferably equal to or more than 100 ppm and equal to or less than 3,000 ppm with respect to the resin composition for forming an optical component. In a case where the amount of the coloring agents is within the above-described numerical range, the resin composition has less color unevenness, it is possible to obtain a molded product having a uniform color tone.

In the resin composition according to the present embodiment, from the viewpoint of the effects of the present invention, a content of the squarylium-based coloring agent in the resin composition is preferably equal to or more than 10 ppm and equal to or less than 2,000 ppm, and particularly preferably equal to or more than 10 ppm and equal to or less than 500 ppm with respect to the resin composition for forming an optical component.

In the resin composition according to the present embodiment, the content of the squarylium-based coloring agent is preferably equal to or more than 0.001 parts by mass and equal to or less than 0.2 parts by mass, and more preferably equal to or more than 0.001 parts by mass and equal to or less than 0.05 parts by mass with respect to 100 parts by mass of the cyclic olefin-based polymer.

In addition, the content of the squarylium-based coloring agent in 100% by mass of the total content of the coloring agents is preferably equal to or more than 2% by mass and equal to or less than 100% by mass, and more preferably equal to or more than 3% by mass and equal to or less than 50% by mass.

### (Other components)

In the resin composition for forming an optical component according to the present embodiment, as necessary, known additives can be incorporated as optional components, to the extent that favorable physical properties of the resin composition according to the present embodiment and a molded product thereof are not impaired. As the additives, for example, a phenolic stabilizer, a higher fatty acid metal salt, an oxidation inhibitor, an ultraviolet absorber, a hindered amine-based light stabilizer, a hydrochloric acid absorbent, a metal inactivator, an antistatic agent, an antifogging agent, a lubricating agent, a slip agent, a nucleating agent, a plasticizer, a flame retardant, and a phosphorus-based stabilizer can be incorporated to the extent that the purpose of the present invention is not impaired, and the blending proportions thereof are appropriate amounts.

In a case where the total of the resin composition for forming an optical component is indicated by 100% by mass, the total content of the cyclic olefin-based polymer and the coloring agent in the resin composition for forming an optical component according to the embodiment is preferably equal to or more than 50% by mass and equal to or less than 100% by mass, more preferably equal to or more than 60% by mass and equal to or less than 100% by mass, still more preferably equal to or more than 70% by mass and equal to or less than 100% by mass, and particularly preferably equal to or more than 80% by mass and equal to or less than 100% by mass.

The resin composition for forming an optical component according to the embodiment can be obtained by a method such as a method of melt-kneading raw materials containing the cyclic olefin-based polymer and the coloring agent using a known kneading apparatus such as an extruder and a Banbury mixer; a method of dissolving raw materials containing the cyclic olefin-based polymer and the coloring agent in a common solvent and then evaporating the solvent; and a method of adding a raw material solution containing the cyclic olefin-based polymer and the coloring agent to a poor solvent for precipitation.

It is preferable that the resin composition for forming an optical component according to the present embodiment contains (A) the cyclic olefin-based polymer and (B) the squarylium-based coloring agent,
in which the cyclic olefin-based polymer (A) comprises at least one selected from the cyclic olefin-based copolymer (A-1) of ethylene or an α-olefin with a cyclic olefin or the ring-opening polymer (A-2) of a cyclic olefin, and
at least one of the squarylium-based coloring agent (B) is the squarylium-based coloring agent represented by General Formula (1) described above.

With the resin composition for forming an optical component according to the present embodiment, having such composition, it is possible to obtain a molded product in which occurrence of color bleeding such as a purple fringing is sufficiently suppressed, and sufficient light transmittance can be maintained even after aging, while maintaining light transmittance able to be used as an optical member for imaging and light absorption at a specific wavelength. In other words, according to the present embodiment, it is possible to provide a resin composition for forming an optical component, which has excellent balance of these properties.

### (Physical properties of resin composition for forming optical component)

With regard to the resin composition for forming an optical component according to the present embodiment, in a molded product formed of the resin composition for forming an optical component, all of the following conditions (1) to (3) are satisfied in a case where the molded product has a thickness at which transmittance of light having a wavelength of 700 nm is 30%.
(1) an average value of transmittance at a wavelength of 300 to 400 nm is equal to or less than 40%, preferably equal to or less than 30% and more preferably equal to or less than 20%.
(2) an average value of transmittance at a wavelength of 500 to 600 nm is equal to or more than 70%, preferably equal to or more than 80% and more preferably equal to or more than 85%.
(3) transmittance at a wavelength of 650 nm is equal to or more than 60%, preferably equal to or more than 65% and more preferably equal to or more than 70%.

It is possible to arbitrarily combine the numerical values of (1) to (3).

With regard to the resin composition for forming an optical component according to the present embodiment, in a case where the transmission characteristics (1) to (3) are adjusted within the above-described numerical ranges in the molded product having a thickness at which transmittance of light having a wavelength of 700 nm is 30%, it is possible to provide a resin composition in which, in a case of being used as a lens, the color bleeding is refined while suppressing unnecessary image coloring.

The transmittance of the resin composition for forming an optical component according to the present embodiment at each wavelength can be determined as follows.

First, for example, a square-shaped plate formed of the resin composition for forming an optical component according to the present embodiment is obtained by press molding (260°C, 10 minutes, pressure of 10 MPa). The obtained plate is used as a sample, and using an ultraviolet-visible-near-infrared spectrophotometer (for example, an ultraviolet-visible-near-infrared spectrophotometer U-4150 (manufactured by Hitachi High-Tech Corporation)), transmittance is measured in 1 nm increments at a wavelength of 200 nm to 1,000 nm. A sample having a thickness at which transmittance of light having a wavelength 700 nm is 30% is adopted, and the transmittance (1) to (3) described above are measured. Here, for example, the average value of the transmittance at a wavelength of 300 to 400 nm represents an arithmetic mean value of transmittance measured at a wavelength of 300 nm to 400 nm at an increment of 1 nm.

In addition, with regard to the resin composition for forming an optical component according to the present embodiment, in a molded product having a thickness of 1 mm, which is formed of the resin composition for forming an optical component, all of the following conditions (1) to (5) are satisfied.
(1) an average value of transmittance at a wavelength of 300 to 400 nm is equal to or less than 40%, preferably equal to or less than 30% and more preferably equal to or less than 20%.
(2) an average value of transmittance at a wavelength of 500 to 600 nm is equal to or more than 70%, preferably equal to or more than 80% and more preferably equal to or more than 85%.
(3) transmittance at a wavelength of 650 nm is equal to or more than 60%, preferably equal to or more than 65% and more preferably equal to or more than 70%.
(4) the minimum value of transmittance at a wavelength of 660 nm to 750 nm is equal to or less than 30%, preferably equal to or less than 25% and more preferably equal to or less than 20%.
(5) an internal haze is equal to or less than 1.0%, preferably equal to or less than 0.7% and more preferably equal to or less than 0.4%.

It is possible to arbitrarily combine the numerical values of (1) to (5).

With regard to the resin composition for forming an optical component according to the present embodiment, in a case where the transmission characteristics (1) to (5) are adjusted within the above-described numerical ranges in the molded product having a thickness of 1 mm, it is possible to provide a resin composition in which, in a case of being used as a lens, the color bleeding is refined while suppressing unnecessary image coloring.

The transmittance of the resin composition for forming an optical component according to the present embodiment at each wavelength can be determined as follows.

First, for example, a square-shaped plate having a thickness of 1 mm, which is formed of the resin composition for forming an optical component according to the present embodiment, is obtained by press molding (260°C, 10 minutes, pressure of 10 MPa). The obtained plate having a thickness of 1 mm is used as a sample, and using an ultraviolet-visible-near-infrared spectrophotometer (for example, an ultraviolet-visible-near-infrared spectrophotometer U-4150 (manufactured by Hitachi High-Tech Corporation)), transmittance is measured in 1 nm increments at a wavelength of 200 nm to 1,000 nm. Here, for example, the average value of the transmittance at a wavelength of 300 to 400 nm represents an arithmetic mean value of transmittance measured at a wavelength of 300 nm to 400 nm at an increment of 1 nm.

With regard to the resin composition for forming an optical component according to the present embodiment, a refractive index of a molded product having a thickness of 1 mm, which is formed of the resin composition for forming an optical component, at a wavelength of 587 nm and a measurement temperature of 25°C is preferably equal to or more than 1.50, more preferably equal to or more than 1.52, and still more preferably equal to or more than 1.54.

In the resin composition for forming an optical component according to the present embodiment, in a case where the refractive index is within the above-described numerical range, for example, in a case of being used as a lens, a thickness of the lens can be smaller as compared with a case of being outside the above-described numerical range.

The refractive index of the molded product formed of the resin composition for forming an optical component can be determined by the following method.

First, for example, a plate having a thickness of 1 mm, which is formed of the resin composition for forming an optical component according to the present embodiment, is obtained by press molding. The obtained plate is used as a sample, and using a refractometer (for example, a refractometer KPR-3000 (manufactured by Shimadzu Corporation)), the refractive index thereof at a wavelength of 587 nm and a measurement temperature of 25°C is measured.

### [Molded product]

The molded product according to the present embodiment is a molded product obtained by molding the resin composition for forming an optical component according to the present embodiment. In other words, the molded product according to the present embodiment is a molded product formed of a resin composition for forming an optical component, containing the cyclic olefin-based polymer (A) and the coloring agent (B).

In the molded product according to the present embodiment, since occurrence of color bleeding such as a purple fringing is sufficiently suppressed, and sufficient light transmittance can be maintained even after aging, while maintaining light transmittance able to be used as an optical member for imaging and light absorption at a specific wavelength, the molded product can be suitably used as an optical component. That is, the optical component according to the present embodiment comprises the molded product according to the present embodiment. The optical component according to the present embodiment can be suitably used as, for example, an optical component such as a lens.

Examples of an optical product comprising the optical component (lens) include a smartphone, a tablet, and a digital camera.

### [Method for manufacturing molded product]

The molded product according to the present embodiment can be obtained by molding the resin composition for forming an optical component according to the present embodiment into a predetermined shape. The method of obtaining the molded product by molding the resin composition for forming an optical component according to the present embodiment is not particularly limited, and any known method can be used. It is preferable that the resin composition for forming an optical component according to the present embodiment is molded by melt molding.

The method may depend on the application and shape, but for example, extrusion molding, injection molding, compression molding, inflation molding, blow molding, extrusion blow molding, injection blow molding, press molding, vacuum molding, powder slush molding, calender molding, foam molding, and the like can be adopted. Among these molding methods, the injection molding method is preferable from the viewpoint of moldability and productivity. In addition, molding conditions are appropriately selected depending on the purpose of use or the molding method. For example, the resin temperature in the injection molding is appropriately selected in a range of usually 150°C to 400°C, preferably 200°C to 350°C, and more preferably 230°C to 330°C.

The molded product according to the present embodiment can be used in various forms such as a lens shape, a spherical shape, a rod shape, a plate shape, a columnar shape, a cylindrical shape, a tubular shape, a fibrous shape, and a film or sheet shape.

The embodiments according to the present invention have been described above; however, these are examples according to the present invention, and thus it is possible to adopt various configurations other than the above within the scope that does not impair the effects of the present invention.

### Examples

Hereinafter, the present invention will be described in more detail with reference to Examples, but the present invention is not limited thereto.

### <Resin>

Resin 1: copolymer of ethylene and a cyclic olefin (tetracyclo[4.4.0.1^{2,5}.1^{7,10}]-3-dodecene) (manufactured by Mitsui Chemicals, Inc., product name: APEL 5014CL; MFR: 36 g/10 min (260°C, 2.16 kg load, conforming to ASTM D1238), Tg: 135°C)
Resin 2: copolymer of ethylene and a cyclic olefin (tetracyclo[4.4.0.1^{2,5}.1^{7,10}]-3-dodecene) (manufactured by Mitsui Chemicals, Inc., product name: APEL 5514ML; MFR: 36 g/10 min (260°C, 2.16 kg load, conforming to ASTM D1238), Tg: 135°C)
Resin 3: ring-opening polymer of a cyclic olefin (manufactured by JSR Corporation, product name: ARTON F4520; MFR: 2 g/10 min (260°C, 2.16 kg load, conforming to ASTM D1238), Tg: 171°C)
Resin 4: ring-opening polymer of a cyclic olefin (manufactured by Nippon Zeon Co., Ltd., product name: ZEONEX K26R; MFR: 20 g/10 min (260°C, 2.16 kg load, conforming to ASTM D1238), Tg: 143°C)

### <Coloring agent>

Squarylium-based coloring agent 1: 1,3-bis[6-[(2-ethyl-1-oxohexyl)amino]-2,3-dihydro-2,3,3-trimethyl-1-octyl-1H-indol-5-yl]-2,4-dihydroxy-cyclobutenediylium
Squarylium-based coloring agent 2: 1,3-bis[6-[(2-ethyl-1-oxohexyl)amino]-2,3-dihydro-2,3,3-trimethyl-1-(propan)-2-yl)-1H-indol-5-yl]-2,4-dihydroxy-cyclobutenediylium
Benzotriazole-based coloring agent 1: 2-(5-chloro-2H-benzo[d][1,2,3]triazol-2-yl)-5-(ethylamino)-4-methylphenol
Benzotriazole-based coloring agent 2: 2-(2'-hydroxy-3'-t-butyl-5'-methylphenyl)-5-octylsulfanylbenzotriazole
Indole-based coloring agent 1: ethyl 2-cyano-3-(1-methyl-2-phenyl-1H-indol-3-yl)acrylate
Anthraquinone-based coloring agent 1: 1-methylamino-4-[(3-methylphenyl)amino]-9,10-anthraquinone

### [Example 1]

60 ppm of the squarylium-based coloring agent 1, 240 ppm of the benzotriazole-based coloring agent 1, and 1,000 ppm of the benzotriazole-based coloring agent 2 were added to a pellet formed of the above-described resin 1, and using a batch-type melt-kneading device (Labo Plastomill), the mixture was melt-kneaded at 260°C to obtain a resin composition. The obtained resin composition was press-molded at 260°C for 10 minutes with a pressure of 10 MPa to produce a plate having a thickness of 1 mm and a plate having a thickness (0.4 mm) at which transmittance of light having a wavelength of 700 nm was 30%.

### [Example 2]

25 ppm of the squarylium-based coloring agent 1, 240 ppm of the benzotriazole-based coloring agent 1, and 1,000 ppm of the benzotriazole-based coloring agent 2 were added to a pellet formed of the above-described resin 1, and using a batch-type melt-kneading device (Labo Plastomill), the mixture was melt-kneaded at 260°C to obtain a resin composition. The obtained resin composition was press-molded at 260°C for 10 minutes with a pressure of 10 MPa to produce a plate having a thickness of 1 mm.

### [Example 3]

50 ppm of the squarylium-based coloring agent 2, 240 ppm of the benzotriazole-based coloring agent 1, and 1,000 ppm of the benzotriazole-based coloring agent 2 were added to a pellet formed of the above-described resin 1, and using a batch-type melt-kneading device (Labo Plastomill), the mixture was melt-kneaded at 260°C to obtain a resin composition. The obtained resin composition was press-molded at 260°C for 10 minutes with a pressure of 10 MPa to produce a plate having a thickness of 1 mm and a plate having a thickness (0.3 mm) at which transmittance of light having a wavelength of 700 nm was 30%.

### [Example 4]

20 ppm of the squarylium-based coloring agent 2, 240 ppm of the benzotriazole-based coloring agent 1, and 1,000 ppm of the benzotriazole-based coloring agent 2 were added to a pellet formed of the above-described resin 1, and using a batch-type melt-kneading device (Labo Plastomill), the mixture was melt-kneaded at 260°C to obtain a resin composition. The obtained resin composition was press-molded at 260°C for 10 minutes with a pressure of 10 MPa to produce a plate having a thickness of 1 mm.

### [Example 5]

60 ppm of the squarylium-based coloring agent 1 and 2,000 ppm of the benzotriazole-based coloring agent 2 were added to a pellet formed of the above-described resin 1, and using a batch-type melt-kneading device (Labo Plastomill), the mixture was melt-kneaded at 260°C to obtain a resin composition. The obtained resin composition was press-molded at 260°C to produce a plate having a thickness of 1 mm and a plate having a thickness (0.4 mm) at which transmittance of light having a wavelength of 700 nm was 30%.

### [Example 6]

25 ppm of the squarylium-based coloring agent 1 and 2,000 ppm of the benzotriazole-based coloring agent 2 were added to a pellet formed of the above-described resin 1, and using a batch-type melt-kneading device (Labo Plastomill), the mixture was melt-kneaded at 260°C to obtain a resin composition. The obtained resin composition was press-molded at 260°C to produce a plate having a thickness of 1 mm.

### [Example 7]

20 ppm of the squarylium-based coloring agent 2 and 2,000 ppm of the benzotriazole-based coloring agent 2 were added to a pellet formed of the above-described resin 1, and using a batch-type melt-kneading device (Labo Plastomill), the mixture was melt-kneaded at 260°C to obtain a resin composition. The obtained resin composition was press-molded at 260°C to produce a plate having a thickness of 1 mm.

### [Example 8]

60 ppm of the squarylium-based coloring agent 1 and 1,000 ppm of the indole-based coloring agent 1 were added to a pellet formed of the above-described resin 1, and using a batch-type melt-kneading device (Labo Plastomill), the mixture was melt-kneaded at 260°C to obtain a resin composition. The obtained resin composition was press-molded at 260°C to produce a plate having a thickness of 1 mm and a plate having a thickness (0.4 mm) at which transmittance of light having a wavelength of 700 nm was 30%.

### [Example 9]

60 ppm of the squarylium-based coloring agent 1, 240 ppm of the benzotriazole-based coloring agent 1, and 1,000 ppm of the benzotriazole-based coloring agent 2 were added to a pellet formed of the above-described resin 2, and using a batch-type melt-kneading device (Labo Plastomill), the mixture was melt-kneaded at 260°C to obtain a resin composition. The obtained resin composition was press-molded at 260°C for 10 minutes with a pressure of 10 MPa to produce a plate having a thickness of 1 mm and a plate having a thickness (0.4 mm) at which transmittance of light having a wavelength of 700 nm was 30%.

### [Example 10]

50 ppm of the squarylium-based coloring agent 2, 240 ppm of the benzotriazole-based coloring agent 1, and 1,000 ppm of the benzotriazole-based coloring agent 2 were added to a pellet formed of the above-described resin 2, and using a batch-type melt-kneading device (Labo Plastomill), the mixture was melt-kneaded at 260°C to obtain a resin composition. The obtained resin composition was press-molded at 260°C for 10 minutes with a pressure of 10 MPa to produce a plate having a thickness of 1 mm and a plate having a thickness (0.3 mm) at which transmittance of light having a wavelength of 700 nm was 30%.

### [Example 11]

60 ppm of the squarylium-based coloring agent 1 and 2,000 ppm of the benzotriazole-based coloring agent 2 were added to a pellet formed of the above-described resin 2, and using a batch-type melt-kneading device (Labo Plastomill), the mixture was melt-kneaded at 260°C to obtain a resin composition. The obtained resin composition was press-molded at 260°C for 10 minutes with a pressure of 10 MPa to produce a plate having a thickness of 1 mm and a plate having a thickness (0.4 mm) at which transmittance of light having a wavelength of 700 nm was 30%.

### [Example 12]

60 ppm of the squarylium-based coloring agent 1 and 1,000 ppm of the indole-based coloring agent 1 were added to a pellet formed of the above-described resin 2, and using a batch-type melt-kneading device (Labo Plastomill), the mixture was melt-kneaded at 260°C to obtain a resin composition. The obtained resin composition was press-molded at 260°C to produce a plate having a thickness of 1 mm and a plate having a thickness (0.4 mm) at which transmittance of light having a wavelength of 700 nm was 30%.

### [Example 13]

60 ppm of the squarylium-based coloring agent 1, 240 ppm of the benzotriazole-based coloring agent 1, and 1,000 ppm of the benzotriazole-based coloring agent 2 were added to a pellet formed of the above-described resin 3, and using a batch-type melt-kneading device (Labo Plastomill), the mixture was melt-kneaded at 260°C to obtain a resin composition. The obtained resin composition was press-molded at 260°C for 10 minutes with a pressure of 10 MPa to produce a plate having a thickness of 1 mm and a plate having a thickness (0.4 mm) at which transmittance of light having a wavelength of 700 nm was 30%.

### [Example 14]

60 ppm of the squarylium-based coloring agent 1, 240 ppm of the benzotriazole-based coloring agent 1, and 1,000 ppm of the benzotriazole-based coloring agent 2 were added to a pellet formed of the above-described resin 4, and using a batch-type melt-kneading device (Labo Plastomill), the mixture was melt-kneaded at 260°C to obtain a resin composition. The obtained resin composition was press-molded at 260°C for 10 minutes with a pressure of 10 MPa to produce a plate having a thickness of 1 mm and a plate having a thickness (0.4 mm) at which transmittance of light having a wavelength of 700 nm was 30%.

### [Comparative Example 1]

Without adding a coloring agent, only a pellet formed of the above-described resin 1 was melt-kneaded at 260°C using a batch-type melt-kneading device (Labo Plastomill), and the obtained resin piece was press-molded at 260°C to produce a plate having a thickness of 1 mm.

### [Comparative Example 2]

240 ppm of the benzotriazole-based coloring agent 1, 1,000 ppm of the benzotriazole-based coloring agent 2, and 40 ppm of the anthraquinone-based coloring agent 1 were added to a pellet formed of the above-described resin 1, and using a batch-type melt-kneading device (Labo Plastomill), the mixture was melt-kneaded at 260°C to obtain a resin composition. The obtained resin composition was press-molded at 260°C to produce a plate having a thickness of 1 mm.

The resin compositions obtained in Examples 1 to 14, Comparative Example 1, and Comparative Example 2 were evaluated as follows.

### [Evaluation of transmittance]

The obtained plate was used as a sample, and using an ultraviolet-visible-near-infrared spectrophotometer U-4150 (manufactured by Hitachi High-Tech Corporation), transmittance was measured in 1 nm increments at a wavelength of 200 nm to 1,000 nm, and average transmittance at a wavelength of 300 to 400 nm, average transmittance at a wavelength of 500 to 600 nm, transmittance at a wavelength of 650 nm, and the minimum transmittance at a wavelength of 660 to 750 nm were calculated.

### [Evaluation of refractive index]

Using a refractometer KPR-3000 (manufactured by Shimadzu Corporation), the refractive index of a sample of the obtained plate at a wavelength of 587 nm and a measurement temperature of 25°C was measured.

### [Evaluation of internal haze]

Using a haze meter HM-150 (manufactured by MURAKAMI COLOR RESEARCH LABORATORY CO., LTD.), an internal haze of a sample of the obtained plate was measured according to JIS K 7136. A value measured in a state in which benzyl alcohol was applied to front and back surfaces of the plate was defined as the internal haze.

### [Evaluation of color bleeding correction effect and coloring]

The obtained plate was bonded so as to cover a lens of a digital camera Power Shot G16 (manufactured by Canon Inc.), and imaging was performed under the following conditions.

### (1) Digital camera setting

F value: 1.8
ISO sensitivity: 1600
Color tone correction: no automatic correction
Flash: none
Zoom: none

### (2) Imaging conditions

Subject: display Pro Display P202 (manufactured by HP Development Company)
Brightness of imaging location: 750 Lx
Distance between subject and camera: 3 m

As a result of imaging under the above-described conditions, a purple fringing (PF) was observed at a part of edge of the subject. The color tone of PF occurrence point and the color tone of PF non-occurrence point at the edge of the subject were respectively described by a Lab color system, and a distance between the two in a Lab color space was used as an index of color bleeding (color bleeding amount), and evaluation was made based on the following standard.
Equal to or less than 10: ⊚
More than 10 or less than 15: ∘
Equal to or more than 15: ×

In addition, the color tone of PF non-occurrence point and the color tone of the same point in a case where the imaging was performed without bonding the plate were respectively described by a Lab color system, and a distance between the two in a Lab color space was used as an index of coloring (coloring amount), and evaluation was made based on the following standard.
Equal to or less than 10: ⊚
More than 10 or less than 15: ∘
Equal to or more than 15: ×

**Table 1**

| Item | Thickness [mm] | Resin | Coloring agent [ppm] | | | | | | Transmittance [%] | | | | | Refractive index | Internal haze [%] | Color bleeding amount | Coloring amount |
|---|---|---|---|---|---|---|---|---|---|---|---|---|---|---|---|---|---|
| | | | SQ1 | SQ2 | BZ1 | BZ2 | IN1 | AN1 | Average at 300 to 400 nm | Average at 500 to 600 nm | 650 nm | 700 nm | Minimum at 660 to 750 nm | | | | |
| Example 1 | 1 | Resin 1 | 60 | | 240 | 1000 | | | > 1 | 90 | 70 | 6 | 6 | 1.544 | 0.3 | ⊚ | ○ |
| | 0.4 | Resin 1 | 60 | | 240 | 1000 | | | 2 | 90 | 82 | 30 | 30 | | | | |
| Example 2 | 1 | Resin 1 | 25 | | 240 | 1000 | | | > 1 | 90 | 82 | 30 | 30 | 1.544 | 0.3 | ⊚ | ○ |
| Example 3 | 1 | Resin 1 | | 50 | 240 | 1000 | | | > 1 | 89 | 67 | 4 | 4 | 1.544 | 0.3 | ⊚ | ○ |
| | 0.3 | Resin 1 | | 50 | 240 | 1000 | | | 3 | 90 | 82 | 30 | 30 | | | | |
| Example 4 | 1 | Resin 1 | | 20 | 240 | 1000 | | | > 1 | 90 | 82 | 30 | 30 | 1.544 | 0.3 | ⊚ | ○ |
| Example 5 | 1 | Resin 1 | 60 | | | 2000 | | | > 1 | 90 | 70 | 6 | 6 | 1.544 | 0.3 | ⊚ | ○ |
| | 0.4 | Resin 1 | 60 | | | 2000 | | | 2 | 90 | 82 | 30 | 30 | | | | |
| Example 6 | 1 | Resin 1 | 25 | | | 2000 | | | > 1 | 90 | 82 | 30 | 30 | 1.544 | 0.3 | ⊚ | ○ |
| Example 7 | 1 | Resin 1 | | 20 | | 2000 | | | > 1 | 90 | 82 | 30 | 30 | 1.544 | 0.3 | ⊚ | ○ |
| Example 8 | 1 | Resin 1 | 60 | | | | 1000 | | > 1 | 89 | 71 | 6 | 6 | 1.544 | 0.3 | ⊚ | ○ |
| | 0.4 | Resin 1 | 60 | | | | 1000 | | 2 | 90 | 82 | 30 | 30 | | | | |
| Example 9 | 1 | Resin 2 | 60 | | 240 | 1000 | | | > 1 | 90 | 70 | 6 | 6 | 1.544 | 0.3 | ⊚ | ○ |
| | 0.4 | Resin 2 | 60 | | 240 | 1000 | | | 2 | 90 | 82 | 30 | 30 | | | | |
| Example 10 | 1 | Resin 2 | | 50 | 240 | 1000 | | | > 1 | 89 | 67 | 4 | 4 | 1.544 | 0.3 | ⊚ | ○ |
| | 0.3 | Resin 2 | | 50 | 240 | 1000 | | | 3 | 90 | 82 | 30 | 30 | | | | |
| Example 11 | 1 | Resin 2 | 60 | | | 2000 | | | > 1 | 90 | 70 | 6 | 6 | 1.544 | 0.3 | ⊚ | ○ |
| | 0.4 | Resin 2 | 60 | | | 2000 | | | 2 | 90 | 82 | 30 | 30 | | | | |
| Example 12 | 1 | Resin 2 | 60 | | | | 1000 | | > 1 | 89 | 71 | 6 | 6 | 1.544 | 0.3 | ⊚ | ○ |
| | 0.4 | Resin 2 | 60 | | | | 1000 | | 2 | 90 | 82 | 30 | 30 | | | | |
| Example 13 | 1 | Resin 3 | 60 | | 240 | 1000 | | | > 1 | 90 | 70 | 6 | 6 | 1.512 | 0.3 | ⊚ | ○ |
| | 0.4 | Resin 3 | 60 | | 240 | 1000 | | | 2 | 90 | 82 | 30 | 30 | | | | |
| Example 14 | 1 | Resin 4 | 60 | | 240 | 1000 | | | > 1 | 90 | 70 | 6 | 6 | 1.535 | 0.3 | ⊚ | ○ |
| | 0.4 | Resin 4 | 60 | | 240 | 1000 | | | 2 | 90 | 82 | 30 | 30 | | | | |
| Comparative Example 1 | 1 | Resin 1 | | | | | | | 49 | 91 | 91 | 91 | 91 | 1.544 | 0.3 | × | ⊚ |
| Comparative Example 2 | 1 | Resin 1 | | | 240 | 1000 | | 40 | > 1 | 76 | 62 | 89 | 62 | 1.544 | 0.3 | ○ | × |

Abbreviations in Table 1 are as follows. The same applies to Table 2 described later.
- SQ:: squarylium-based coloring agent
- BZ:: benzotriazole-based coloring agent
- IN:: indole-based coloring agent
- AN:: anthraquinone-based coloring agent

As shown in Examples 1, 3, 5, and 8 to 14 according to the present invention of Table 1, the molded product having a thickness at which transmittance of light having a wavelength of 700 nm was 30%, by satisfying all of the requirements (1) to (3), the occurrence of color bleeding such as the purple fringing was sufficiently suppressed, and the molded product exhibited light transmittance able to be used as an optical member for imaging and light absorption at a specific wavelength, so that the balance between these properties was excellent.

In addition, as shown in Examples 1 to 14 according to the present invention, in the molded product having a thickness of 1 mm, by satisfying all of the requirements (1) to (5), the occurrence of color bleeding such as the purple fringing was sufficiently suppressed, and the molded product exhibited light transmittance able to be used as an optical member for imaging and light absorption at a specific wavelength, so that the balance between these properties was excellent.

### [Amount of change in light transmittance before and after heat resistance test]

The obtained plate having a thickness of 1 mm was heated in a high temperature room at a temperature of 105°C for 168 hours. Light transmittance of the plate after the test was measured by the above-described method, and an amount of change in average transmittance at a wavelength of 300 to 400 nm, an amount of change in average transmittance at a wavelength of 500 to 600 nm, an amount of change in transmittance at a wavelength of 650 nm, and an amount of change in minimum transmittance at a wavelength of 660 to 750 nm were calculated as compared with those before the test. These results were evaluated based on the following standard.
Equal to or more than -1% and equal to or less than 1%: ⊚
Equal to or more than -2% or less than -1%, or more than 1% and equal to or less than 2%: o
Less than -2% or more than 2%: ×

### [Amount of change in light transmittance before and after humidity and heat resistance test]

The obtained plate having a thickness of 1 mm was heated in a high temperature and high humidity room at a temperature of 85°C and a humidity of 85 %Rh for 168 hours. Light transmittance of the plate after the test was measured by the above-described method, and an amount of change in average transmittance at a wavelength of 300 to 400 nm, an amount of change in average transmittance at a wavelength of 500 to 600 nm, an amount of change in transmittance at a wavelength of 650 nm, and an amount of change in minimum transmittance at a wavelength of 660 to 750 nm were calculated as compared with those before the test. These results were evaluated based on the following standard.
Equal to or more than -1% and equal to or less than 1%: ⊚
Equal to or more than -2% or less than -1%, or more than 1% and equal to or less than 2%: o
Less than -2% or more than 2%: ×

### [Amount of change in light transmittance before and after light resistance test]

A light resistance test was performed on the obtained plate having a thickness of 1 mm under the following conditions.
Light source: ultraviolet fluorescent lamp (UVA-340)
Irradiation illuminance: 0.63 W/m², 340 nm
Light source output power: 500 W/m²
Test temperature: 60°C
Irradiation time: 168 hours

Light transmittance of the plate after the test was measured by the above-described method, and an amount of change in average transmittance at a wavelength of 300 to 400 nm, an amount of change in average transmittance at a wavelength of 500 to 600 nm, an amount of change in transmittance at a wavelength of 650 nm, and an amount of change in minimum transmittance at a wavelength of 660 to 750 nm were calculated as compared with those before the test. These results were evaluated based on the following standard.
Equal to or more than -1% and equal to or less than 1%: ⊚
Equal to or more than -2% or less than -1%, or more than 1% and equal to or less than 2%: o
Less than -2% or more than 2%: ×

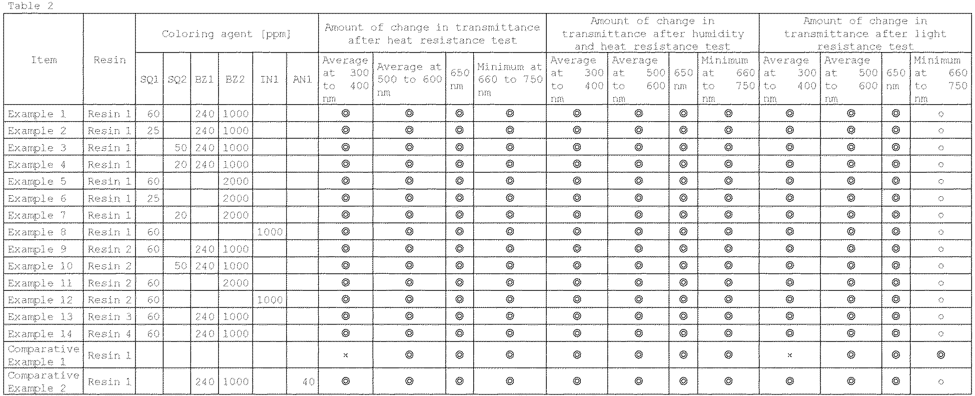

As shown in Examples according to the present invention of Table 2, sufficient light transmittance could be maintained even after aging.

From the results of Table 1 and Table 2, according to the present invention, it was found that the occurrence of color bleeding such as the purple fringing was sufficiently suppressed, and sufficient light transmittance could be maintained even after aging, while maintaining light transmittance able to be used as an optical member for imaging and light absorption at a specific wavelength, so that the balance between these properties was excellent.

Priority is claimed on Japanese Patent Application No. 2021-193298, filed November 29, 2021, the disclosure of which is incorporated herein by reference.

## Claims

1. A resin composition for forming an optical component, comprising:
(A) a cyclic olefin-based polymer; and
(B) one or a plurality of coloring agents,
wherein the cyclic olefin-based polymer (A) comprises at least one selected from a copolymer of ethylene or an α-olefin with a cyclic olefin, and a ring-opening polymer of a cyclic olefin, and
a molded product having a thickness at which transmittance of light having a wavelength of 700 nm is 30%, which is formed of the resin composition for forming an optical component, satisfies all of the following conditions (1) to (3),
(1) an average value of transmittance at a wavelength of 300 to 400 nm is equal to or less than 40%,
(2) an average value of transmittance at a wavelength of 500 to 600 nm is equal to or more than 70%, and
(3) transmittance at a wavelength of 650 nm is equal to or more than 60%.

2. A resin composition for forming an optical component, comprising:
(A) a cyclic olefin-based polymer; and
(B) one or a plurality of coloring agents,
wherein the cyclic olefin-based polymer (A) comprises at least one selected from a copolymer of ethylene or an α-olefin with a cyclic olefin, and a ring-opening polymer of a cyclic olefin, and
a molded product having a thickness of 1 mm, which is formed of the resin composition for forming an optical component, satisfies all of the following conditions (1) to (5),
(1) an average value of transmittance at a wavelength of 300 to 400 nm is equal to or less than 40%,
(2) an average value of transmittance at a wavelength of 500 to 600 nm is equal to or more than 70%,
(3) transmittance at a wavelength of 650 nm is equal to or more than 60%,
(4) a minimum value of transmittance at a wavelength of 660 nm to 750 nm is equal to or less than 30%, and
(5) an internal haze is equal to or less than 1.0%.

3. The resin composition for forming an optical component according to claim 1 or 2,
wherein at least one of the coloring agent (B) is a squarylium-based coloring agent.

4. The resin composition for forming an optical component according to any one of claims 1 to 3,
wherein at least one of the coloring agent (B) is a squarylium-based coloring agent represented by General Formula (1), 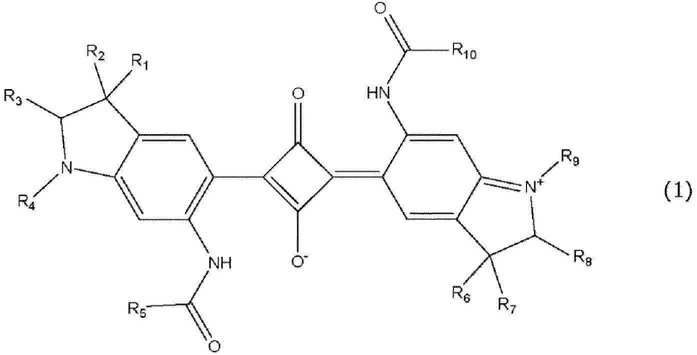
wherein, in the Formula (1), R₁ to R₁₀ each independently represent a hydrogen atom, a halogen atom, a cyano group, a nitro group, an alkyl group having 1 to 20 carbon atoms, an alkenyl group having 1 to 20 carbon atoms, a halogenoalkyl group having 1 to 20 carbon atoms, an alkoxy group having 1 to 20 carbon atoms, a halogenoalkoxy group having 1 to 20 carbon atoms, an alkylthio group having 1 to 20 carbon atoms, an alkoxyalkyl group having 1 to 20 carbon atoms, an alkoxyalkoxyalkyl group having 1 to 20 carbon atoms, a halogenoalkoxyalkyl group having 1 to 20 carbon atoms, a substituted or unsubstituted aryl group, a substituted or unsubstituted aralkyl group, a substituted or unsubstituted amino group, a substituted or unsubstituted acyl group, a substituted or unsubstituted aryloxy group, a substituted or unsubstituted aryloxyalkyl group, a substituted or unsubstituted aralkyloxy group, a substituted or unsubstituted aralkyloxyalkyl group, or a substituted or unsubstituted arylthio group.

5. The resin composition for forming an optical component according to claim 4,
wherein R₄ and R₉ in General Formula (1) are alkyl groups having 3 or more carbon atoms.

6. A resin composition for forming an optical component, comprising:
(A) a cyclic olefin-based polymer; and
(B) a squarylium-based coloring agent,
wherein the cyclic olefin-based polymer (A) comprises at least one selected from a copolymer of ethylene or an α-olefin with a cyclic olefin, and a ring-opening polymer of a cyclic olefin, and
at least one of the coloring agent (B) is a squarylium-based coloring agent represented by General Formula (1), 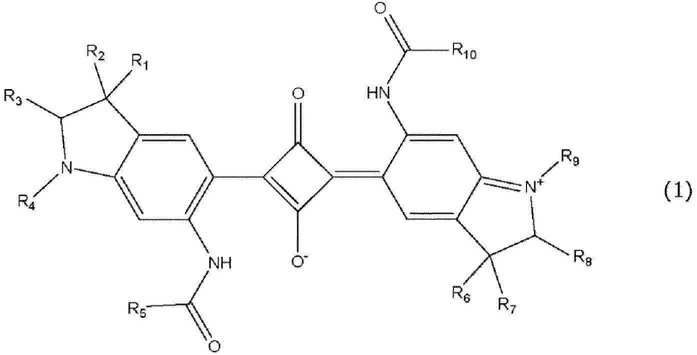
wherein, in the Formula (1), R₁ to R₁₀ each independently represent a hydrogen atom, a halogen atom, a cyano group, a nitro group, an alkyl group having 1 to 20 carbon atoms, an alkenyl group having 1 to 20 carbon atoms, a halogenoalkyl group having 1 to 20 carbon atoms, an alkoxy group having 1 to 20 carbon atoms, a halogenoalkoxy group having 1 to 20 carbon atoms, an alkylthio group having 1 to 20 carbon atoms, an alkoxyalkyl group having 1 to 20 carbon atoms, an alkoxyalkoxyalkyl group having 1 to 20 carbon atoms, a halogenoalkoxyalkyl group having 1 to 20 carbon atoms, a substituted or unsubstituted aryl group, a substituted or unsubstituted aralkyl group, a substituted or unsubstituted amino group, a substituted or unsubstituted acyl group, a substituted or unsubstituted aryloxy group, a substituted or unsubstituted aryloxyalkyl group, a substituted or unsubstituted aralkyloxy group, a substituted or unsubstituted aralkyloxyalkyl group, or a substituted or unsubstituted arylthio group.

7. The resin composition for forming an optical component according to claim 6,
wherein R₄ and R₉ in General Formula (1) are alkyl groups having 3 or more carbon atoms.

8. The resin composition for forming an optical component according to any one of claims 1 to 7,
wherein, a refractive index to light having a wavelength of 587 nm of a molded product having a thickness of 1 mm, which is formed of the resin composition for forming an optical component, is equal to or more than 1.50.

9. The resin composition for forming an optical component according to any one of claims 1 to 8,
wherein a total content of the coloring agents in the resin composition for forming an optical component is equal to or more than 100 ppm and equal to or less than 5,000 ppm with respect to the resin composition for forming an optical component.

10. A molded product obtained by molding the resin composition for forming an optical component according to any one of claims 1 to 9.

11. An optical component comprising:
the molded product according to claim 10.

12. The optical component according to claim 11,
wherein the optical component is a lens.

13. A lens comprising:
a molded product obtained by molding the resin composition for forming an optical component according to claim 1,
wherein the lens satisfies all of the following conditions (1) to (3),
(1) an average value of transmittance at a wavelength of 300 to 400 nm is equal to or less than 40%,
(2) an average value of transmittance at a wavelength of 500 to 600 nm is equal to or more than 70%, and
(3) transmittance at a wavelength of 650 nm is equal to or more than 60%.

14. A lens comprising:
a molded product obtained by molding the resin composition for forming an optical component according to claim 2,
wherein the lens satisfies all of the following conditions (1) to (5),
(1) an average value of transmittance at a wavelength of 300 to 400 nm is equal to or less than 40%,
(2) an average value of transmittance at a wavelength of 500 to 600 nm is equal to or more than 70%,
(3) transmittance at a wavelength of 650 nm is equal to or more than 60%,
(4) a minimum value of transmittance at a wavelength of 660 nm to 750 nm is equal to or less than 30%, and
(5) an internal haze is equal to or less than 1.0%.
